# EUROPÄISCHE PATENTSCHRIFT

(11) **EP 2 008 898 B1**
(45) Veröffentlichungstag und Bekanntmachung des Hinweises auf die Patenterteilung: **19.01.2011**
(21) Anmeldenummer: 08011641.1
(22) Anmeldetag: 26.06.2008
(51) Int. Cl.: B60T 13/74, F16D 65/28

(54) **Elektrisch ansteuerbare Baugruppe mit einem Hydraulikanschluss**
Electrically controllable assembly with a hydraulic connection
Composant commandable électrique doté d'un raccordement hydraulique

(30) Priorität: 26.06.2007 DE 102007029579
(43) Veröffentlichungstag der Anmeldung: 31.12.2008
(73) Patentinhaber: Ortlinghaus-Werke GmbH, 42929 Wermelskirchen (DE)
(72) Erfinder: Seeger, Herbert, 32547 Bad Oeynhausen (DE)
(74) Vertreter: Füssel, Michael

(56) Entgegenhaltungen:
- WO-A-96/39318
- WO-A-2006/067196
- DE-A1- 4 229 042
- US-A- 5 667 284
- US-A1- 2002 020 591

## Beschreibung

Die vorliegende Erfindung betrifft eine elektrisch ansteuerbare Baugruppe mit einem Hydraulikanschluss für die Betätigung des Hydraulikaktuators einer hydraulisch beaufschlagbaren Bremse, wie z.B. aus US-A-2002/0020591 bekannt.

Hydraulisch beaufschlagbare Bremsen sind allgemein bekannt.

Sie dienen zum Abbremsen einer Last und werden über ihren Hydraulikaktuator entweder in Bremsstellung verlagert oder - im Falle einer Sicherheitsbremse - gelüftet.

Bei einer Sicherheitsbremse geht die Bremse durch eine vorgegebene Federvorlast in Bremsstellung und wird über ihren Hydraulikaktuator in ihre Freigabestellung zurückverlagert.

Die vorliegende Erfindung ist in soweit aber geeignet, sowohl bei Sicherheitsbremsen als auch bei aktiven Bremsen ihre Verwendung zu finden.

Aus Gründen der vereinfachten Darstellung wird aber im folgenden stets von Sicherheitsbremsen ausgegangen.

Für die Anwendung der Erfindung auf aktive Bremsen gelten diese Ausführungen dann entsprechend, sofern nicht gesondert auf Unterschiedlichkeiten hingewiesen wird.

Zur Beaufschlagung des Hydraulikaktuators einer Bremse dient üblicherweise eine mit einem Kraftgeber gekoppelte Kolbenzylindereinheit, die Gebereinheit, welche über vorgegebene Bewegungsrichtungen des Kraftgebers hin- und herverlagert wird.

Als Kraftgeber kommen zum Beispiel Linearmotoren in Betracht, die über geeignete elektrische Ansteuerungen aktiviert werden.

Dabei kommt allerdings der Auslegung der Linearantriebe erhebliche Bedeutung zu, da diese Bremsen insbesondere im Bereich der Pressentechnik die geltenden Sicherheitsanforderungen erfüllen müssen.

Die elektromotorische Baugruppe zur Bremsenbetätigung muss daher auch eine Schnellabschaltung der Bremse mit Notstoppfunktion ermöglichen.

Für den Fall der elektromotorischen Betätigung einer Aktivbremse ist eine Notstoppfunktion zwar nicht erforderlich, hier kann jedoch eine Parkbremsfunktion erforderlich werden.

Es ist daher Aufgabe der vorliegenden Erfindung, eine Baugruppe für die elektromotorische Betätigung einer hydraulisch beaufschlagbaren Bremse zu schaffen, welche sowohl bei aktiven Bremsen als auch bei Sicherheitsbremsen verwendbar ist und die alle insoweit erforderlichen Sicherheitsanforderungen auf einfache Weise realisierbar macht.

Diese Aufgabe löst die Erfindung mit den Merkmalen des Hauptanspruchs.

Wesentlich ist die Verwendung eines elektromotorischen Drehantriebs, der abhängig von den jeweiligen Drehrichtungen eine hin- und hergerichtete Längsbewegung der Hubspindel hervorruft, die ihrerseits auf den beweglichen Teil einer Einheit aus Kolben und Zylinder einwirkt.

Die dabei hervorgerufene Verdrängung von Hydraulikflüssigkeit wird letztlich dem Hydraulikaktuator der Bremse aufgegeben, so dass die Bremse, je nach Bauart, entweder in die Bremsstellung verlagert wird oder, im Falle einer Sicherheitsbremse, gelüftet wird.

Hierfür ist zwischen dem elektromotorischen Drehantrieb und der Hubspindel ein Getriebe vorgesehen, mit dessen Hilfe die Drehbewegung des Elektromotors in eine Hin- und Herbewegung der Hubspindel umgesetzt wird.

Über das Getriebe lässt sich in Folge der Möglichkeit einer Untersetzung trotz großer erforderlicher Kräfte ein relativ kleiner Elektromotor verwenden.

Soll darüber hinaus zusätzlich einer Notstoppfunktion mit sofortiger Wirkung realisierbar sein, wird vorgeschlagen, die Hydraulikleitung zum Hydraulikaktuator der Bremse parallel über zumindest ein elektrisch ansteuerbares Sperrventil mit zumindest einem Volumenspeicher zu verbinden.

Soll darüber hinaus mit der erfindungsgemäßen Baugruppe eine zusätzliche Sicherheitsfunktion realisiert werden, die z. B. erforderlich sein kann, wenn der betreffende Volumenspeicher klemmt oder die elektrische Ansteuerung des Sperrventils fehl geht, wird ergänzend vorgeschlagen, eine weitere redundante Hydraulikleitung mit einem weiteren redundanten elektrisch ansteuerbaren Sperrventil zu einem weiteren ebenfalls redundanten Volumenspeicher anzuschalten, so dass die Notstoppfunktion dann letzlich von zwei parallel geschalteten Notstoppsystemen realisierbar ist.

Das System zur Erlangung der Notstoppfunktion, allein oder redundant, dient im Falle einer Aktivbremse auch zur Realisierung der Parkbremsfunktion, während im Falle einer Sicherheitsbremse das Volumen des Volumenspeichers verwendet wird, um eine eventuell gelüftete Sicherheitsbremse schlagartig in ihre Bremsstellung verlagern zu können.

Das aus elektrisch schließendem Sperrventil und Volumenspeicher bestehende Teilsystem, allein oder redundant, ist im Falle einer Sicherheitsbremse erheblich schneller als das System aus elektromotorischem Drehantrieb, Getriebe und Hubspindel und liegt zu diesem Zweck parallel an der Hydraulikleitung, welche die erfindungsgemäße Baugruppe mit dem Hydraulikaktuator der Bremse verbindet.

Die folgenden Ausführungen gelten, sofern nichts anderes gesagt ist, stets für Systeme zur Notstoppfunktion, allein oder redundant.

Wesentlich ist hierbei, dass das Sperrventil elektrisch schließt, so dass es bei Stromausfall garantiert offen ist, um das zur Lüftung der Bremse notwendige Volumen an Hydraulikflüssigkeit in den Volumenspeicher entlasten zu können.

Ist darüber hinaus der Volumenspeicher vorgespannt, zum Beispiel durch eine Speicherfeder oder einen pneumatisch vorgespannten Membranspeicher, wird das im volumenspeicher befindliche Volumen an Hydraulikflüssigkeit in Folge der Vorspannung bei anschließend geöffnetem Sperrventil wieder in das System zurückgelassen.

Zweckmäßiger weise ist das Sperrventil als leckölfreies Sitzventil ausgeführt.

Damit das Sperrventil darüber hinaus stets nur ausschließlich zwei eindeutige Endstellungen einnimmt, soll es zusätzlich in Öffnungsrichtung federbeaufschlagt sein, so dass bei Stromausfall die einander zugeordneten Dichtflächen des Sperrventils durch die Federvorspannung zwangsläufig voneinander abheben und den Weg von der Hydraulikleitung in den volumenspeicher freigeben.

Durch die Verwendung eines elektrisch schließenden Sperrventils kann das Getriebe zwischen elektromotorischem Drehantrieb und Hubspindel als selbsthemmendes Getriebe ausgeführt sein.

Dies lässt insbesondere Getriebebauarten zu, die eine starke Untersetzung ermöglichen, um kleine und preiswerte Elektromotoren verwenden zu können.

Trotzdem wird über die parallel geschaltete Baugruppe von Sperrventil und Volumenspeicher im Falle einer Sicherheitsbremse stets die Sicherheitsfunktion und im Falle einer Aktivbremse stets die Parkbremsfunktion erfüllt.

Für die konkrete Ausführung selbsthemmender Getriebe kommen insbesondere Hohlwellenmotoren in Betracht, deren Hohlwelle als Spindelmutter ausgeführt ist. Hierfür sind Ausführungsbeispiele angegeben.

Darüber hinaus wird zweckmäßiger Weise die Kolbenzylindereinheit, welche über die Hydraulikleitung mit dem Hydraulikaktuator der Bremse kommuniziert, mit einem Tauchkolben ausgestattet, der unter Freilassung eines Ringspaltes in seinem Zylinder hin- und herverlagerbar ist.

Hieraus ergibt sich eine völlig verschleißfreie Kolbenzylinderpaarung, wobei das Tauchvolumen des Kolbens in seinem Zylinder zumindest gleich dem oder größer als das Hubvolumen der Bremse sein muss.

Vorteilhafte Ausführungsformen ergeben sich aus den Unteransprüchen.

Im folgenden wird die Erfindung anhand von Ausführungsbeispielen näher erläutert.

Es zeigen:
- Fig. 1: ein erstes Ausführungsbeispiel der Erfindung mit federbelastetem Volumenspeicher
- Fig. 2: ein weiteres Ausführungsbeispiel der Erfindung mit pneumatisch vorgespanntem Membranspeicher
- Fig. 3: Prinzipdarstellung einer Sicherheitsbremse
- Fig. 4: Prinzipdarstellung einer Aktivbremse
- Fig. 5: noch ein Ausführungsbeispiel mit Vomumenspeicherpaar

Sofern im folgenden nichts anderes gesagt ist, gilt die folgende Beschreibung stets für alle Figuren.

Die Figuren zeigen eine elektrisch ansteuerbare Baugruppe 1 nach dieser Erfindung.

Die Baugruppe 1 weist einen Hydraulikanschluss 2 auf. Über den Hydraulikanschluss 2 ist mittels einer Hydraulikleitung 14 der Hydraulikaktuator 4 einer hydraulisch beaufschlagbaren Bremse 3 mit der Baugruppe 1 verbindbar.

Wesentlich ist, dass die Baugruppe 1 über einen elektromotorischen Drehantrieb 5 verfügt, auf dessen Abtriebsseite 6 ein Getriebe 7 angeordnet ist.

Über das Getriebe 7 ist eine Hubspindel 8 mit dem elektromotorischen Drehantrieb 5 verbunden.

Das Getriebe 7 dient der Umsetzung der beiden möglichen Drehrichtungen 9 des elektromotorischen Drehantriebs 5 in hin- und hergehende Längsbewegungen 10 der Hubspindel 8.

Wesentlich für die Erfindung ist also eine getriebliche Koppelung zwischen einem elektromotorischen Drehantrieb 5 für beide Drehrichtungen und einer lediglich Längsbewegungen 10 ausführenden Hubspindel 8 auf dessen weitere Funktion jetzt eingegangen wird.

Die Hubspindel 8 ist ihrerseits mit dem beweglichen Teil einer Einheit aus Kolben 11 und Zylinder 12 verbunden.

Die Einheit aus Kolben 11 und Zylinder 12 umschließt einen Hydraulikraum, der mit entsprechender Hydraulikflüssigkeit gefüllt ist.

Bei einem Verlagern des beweglichen Teils dieser Einheit wird eine entsprechende Menge an Hydraulikflüssigkeit über den Hydraulikanschluss 2 in die Hydraulikleitung 14 entlassen oder geleert.

Zu diesem Zweck ist die Einheit aus Kolben 11 und Zylinder 12 ausgangsseitig mit dem Hydraulikanschluss 2 versehen und für die Hydraulikleitung 14 mit dem Hydraulikaktuator 4 der hydraulisch beaufschlagbaren Bremse 3 verbunden.

Wie man sich vorstellen kann, wird bei Verlagerung des beweglichen Teils der Einheit aus Kolben 11 und Zylinder 12 eine entsprechende Menge an Hydraulikflüssigkeit hin- bzw. hergeschoben, so dass der Hydraulikaktuator 4 entsprechend hin- bzw. herverlagert wird.

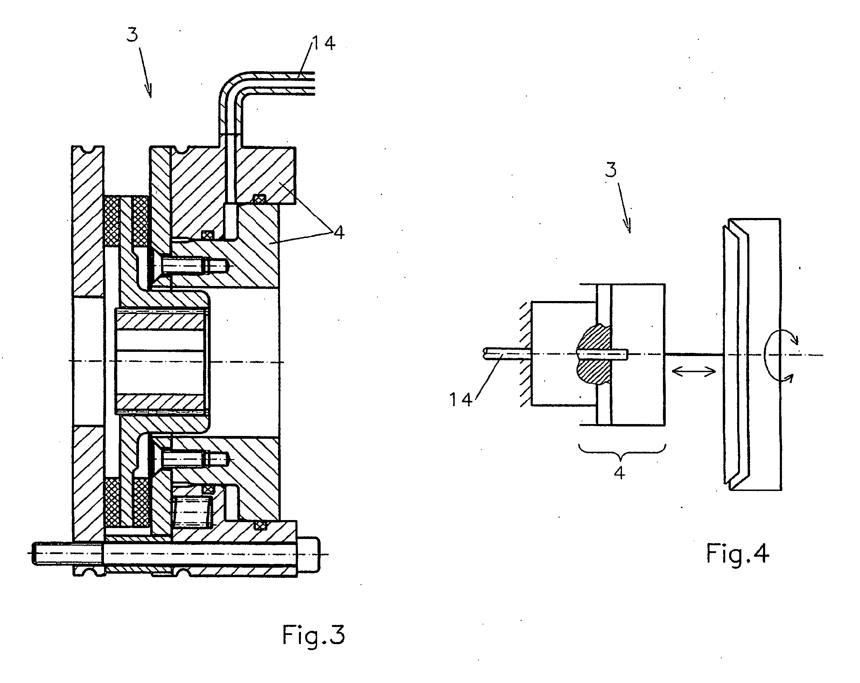

Im Falle einer aktiven Bremse gemäß Fig.4 wird auf diese Weise die Bremswirkung hervorgerufen, weil der Hydraulikaktuator 4 bei einer aktiven Bremse zu einem ansteigen des Bremsdruckes führt, sobald er mit Hydraulikflüssigkeit gefüllt wird.

Im Falle einer Sicherheitsbremse gemäß Fig.3 gilt diese Überlegung in umgekehrter Weise.

Eine Sicherheitsbremse wird nämlich über ein Federpaket oder ähnliches in die Bremsstellung verlagert und mittels des Hydraulikaktuators 4 gelüftet, das heißt in Freigabestellung versetzt.

Die vorliegende Erfindung dient daher dem Zweck, unabhängig von der Bremsbauart den Hydraulikaktuator über elektromotorischen Drehantrieb zu betätigen.

Damit die erfindungsgemäße Baugruppe sowohl bei einer Sicherheitsbremse die Notstopp-Funktion ausführen kann oder bei einer aktiven Bremse eine Parkbremsfunktion hat, ist zusätzlich vorgesehen, dass an die Hydraulikleitung 14 zum Hydraulikaktuator 4 eine weitere Hydraulikleitung 15 angeschlossen ist, die über ein Sperrventil 16 mit einem Volumenspeicher 17 kommuniziert.

Wesentlich ist insoweit, dass es sich um ein elektrisch schließendes Sperrventil handelt, welches bei Anliegen einer Spannung in die Schließfunktion geht, ansonsten aber geöffnet ist.

Da das gesamte hydraulische System in sich geschlossen ist, ist bei elektrisch beaufschlagtem Sperrventil die Betätigung des Hydraulikaktuators 4 sichergestellt, wobei allerdings im Falle eines Stromausfalles das Sperrventil aus seinem Schließsitz in Richtung Durchlass geöffnet wird, so dass die oben genannten Zusatzfunktionen realisierbar sind.

Empfehlenswert ist insoweit, die Volumenspeicher 17 vorzuspannen.

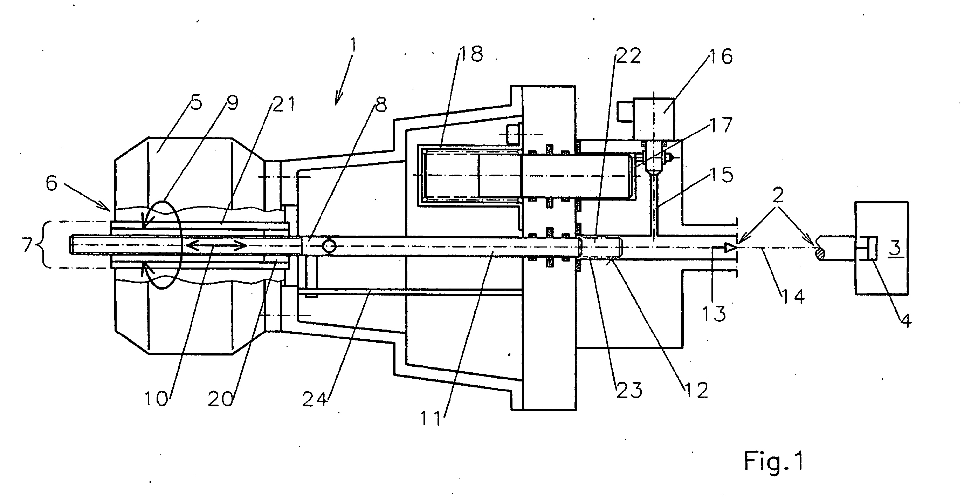

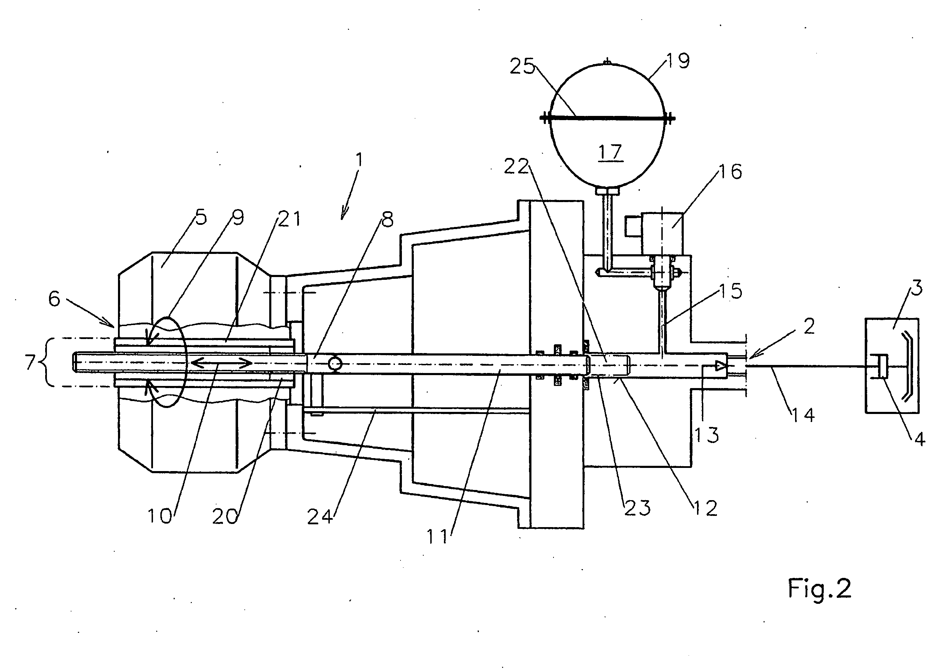

Dies kann im Falle der Fig.1 über eine Speicherfeder 18 geschehen oder im Falle der Fig.2 über einen pneumatisch vorgespannten Membranspeicher 19.

Bei dem Membranspeicher 19 handelt es sich um einen Raum, der einerseits an die weitere Hydraulikleitung 15 angeschlossen ist und andererseits über eine Membran 25 die in zwei Teilräume unterteilt ist.

Einer der Teilräume ist mit der weiteren Hydraulikleitung 15 verbunden, im anderen der beiden Teilräume befindet sich ein Gas, welches die elastische Membran 25 in Richtung zum ersten Teilraum vorspannt.

Auf diese Weise wird die Druckflüssigkeit im Hydrauliksystem stets geringfügig vorgespannt.

Zusätzlich ist das Sperrventil 16 als leckölfreies Sitzventil ausgeführt, welches auf diese Weise eine eindeutige Ein-/Ausstellung einnehmen muss.

Diese Maßnahme wird unterstützt dadurch, dass der Dichtkörper des Sperrventils 16 in Öffnungsrichtung federbeaufschlagt ist.

Auf diese Weise nimmt der Dichtkörper des Sperrventils 16 stets und ausschließlich eine der beiden Endstellungen ein, je nach dem welche der beiden am Sperrkörper angreifenden Kräfte im Moment überwiegt.

Im Falle der Fig.1 ist darüber hinaus realisiert, dass der Volumenspeicher 17 unter der Vorlast einer Speicherfeder 18 steht, die bestrebt ist, den Kolben des dort gezeigten Volumenspeichers 17 in Richtung zum geschlossenen Hydrauliksystem zu verlagern.

Es ist ersichtlich, dass durch die Vorlast der Speicherfeder in dem hydraulischen System vergleichbar zur Vorspannung der Membran im Falle der Fig.2, ein Vordruck von nur wenigen 1/10 Bar oder bedarfsweise auch mehr besteht.

Die Wirkungsweisen der beiderseitigen Volumenspeicher 17 sind daher im Hinblick auf die Erfindung dieselben.

Im Falle der Fig.3 ist die Bremse 3 darüber hinaus als Sicherheitsbremse ausgeführt, die in Bremsrichtung unter der Last der Sicherheitsfedern steht, während sie hydraulisch gelüftet werden kann.

Da die Last der Sicherheitsfedern stets anliegt, geht die Sicherbremse bei Stromausfall federbelastet in Bremsstellung.

Für die nicht gezeigten Einzelheiten wird auf den Stand der Technik verwiesen (hier z.B. www.ortlinghaus.de).

Im Falle der Fig.4 handelt es sich um eine aktive Bremse 3, die über den Hydraulikaktuator 4 in die Bremsstellung verlagert wird.

Zu diesem Zweck muss der Hydraulikaktuator 4 durch die Hydraulikflüssigkeit, die sich im System befindet, in die entsprechende Richtung verlagert werden.

Ferner realisieren die Ausführungsbeispiele gemäß Fig.1 und 2 ein selbsthemmendes Getriebe zwischen dem elektromotorischen Drehantrieb 5 und der Hubspindel 8.

Diese Weiterbildung bietet den Vorteil, dass für den Zustand der Dauerlüftung, wie sie bei Sicherheitsbremsen üblich ist, kein Haltestrom benötigt wird.

Gleichwohl wird über das elektrisch in Schließstellung fahrbare Sperrventil 16 die Sicherheitsfunktion garantiert.

Dies wird dadurch erreicht, dass das Sperrventil 16 bei Stromausfall über die, den Dichtkörper beaufschlagende Feder, in Öffnungsrichtung des Sperrventils 16 zwangsweise verlagert wird.

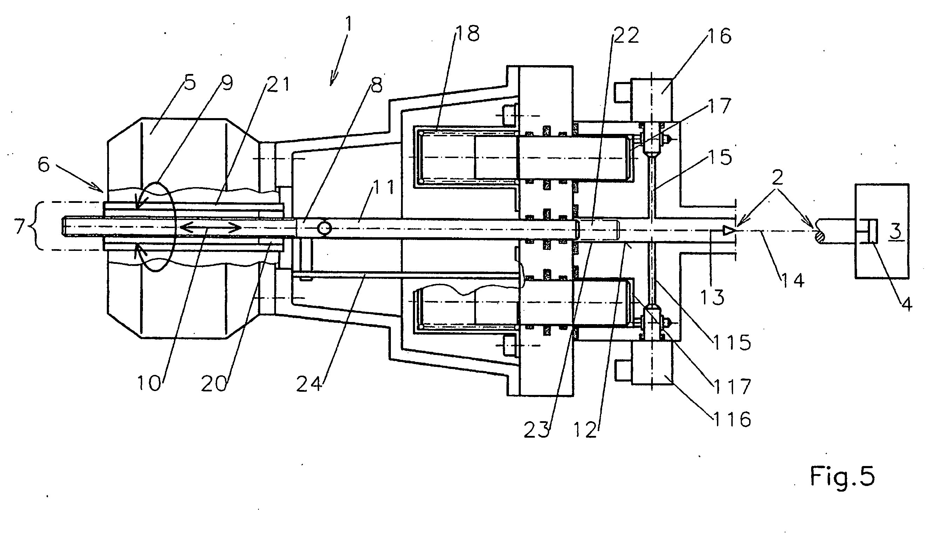

Ergänzend hierzu zeigt Fig. 5 eine Weiterbildung der Erfindung, bei welcher an die Hydraulikleitung 14, welche die Baugruppe 1 mit dem Hydraulikaktuator 4 verbindet, eine weitre redundante Hydraulikleitung 115 angeschlossen ist.

Die redundante Hydraulikleitung 115 führt über ein redundantes Sperrventil 116 zu einem weiteren redundanten Volumenspeicher 117.

Das System aus Hydraulikleitung, Sperrventil und Volumenspeicher ist bei dieser Weiterbildung mehrfach vorhanden.

Sollte also, aus welchen Gründen auch immer, z. B. eines der Sperrventile 16; 116 klemmen oder der Kolben des Volumenspeichers 17; 117 festhängen, wird über das jeweils redundante System trotzdem die Notstoppfunktion sichergestellt.

Im Falle der Verwendung der Baugruppe 1 für eine Aktivbremse gilt dies sinngemäß auch für die Parkbremsfunktion.

Im vorliegenden Fall ist das selbsthemmende Getriebe durch eine Spindelmutter 20 realisiert.

Die Spindelmutter 20 greift in ein entsprechendes Gewinde der Hubspindel 8 ein, so dass die Hubspindel 8 bei Drehung der Spindelmutter 20 nach rechts oder links verschoben wird, abhängig von der jeweiligen Drehrichtung 9 des elektromotorischen Drehantriebs 5.

Ergänzend ist zu sagen, dass sich die Hubspindel 8 über eine Drehmomentstütze 24, die sich am Gehäuse der Baugruppe 1 abstützt, selber nicht drehen kann, so dass die Drehbewegung der Spindelmutter 20 vollständig in eine Hin- und Herbewegung der Spindel 8 umgesetzt wird.

Im vorliegenden Fall ist der elektromotorische Drehantrieb 5 als Hohlwellenmotor ausgeführt, dessen Hohlwelle 21 in seinem Inneren die Spindelmutter 20 realisiert.

Über die Gewindesteigung wird, wie man nachvollziehen kann, der Vorschub pro Umdrehung des elektromotorischen Drehantriebs 5 festgelegt, so dass von einer entsprechenden Untersetzung des System auszugehen ist.

Auf diese Weise kann ein relativ klein bauender und preiswerter Antriebsmotor für die Ansteuerung der hydraulisch beaufschlagbaren Bremse nach vorliegender Erfindung verwendet werden.

Weiterhin weist die Einheit aus Kolben 11 und Zylinder 12 einen sogenannten Tauchkolben 22 auf, der unter Freilassung eines Ringspaltes 23 in seinem Zylinder 12 hin- und herverlagerbar ist.

Durch den fehlenden Wandkontakt zwischen Kolben 11 und Zylinder 12 ist diese Einheit praktisch verschleißfrei, unabhängig von der Anzahl der zurückgelegten Lastzyklen.

Zur Funktion:
Im folgenden soll die Funktion bei einer Sicherheitsbremse noch näher erläutert werden.

Die Funktion bei einer aktiven Bremse gilt sinngemäß.

Für den Fall einer redundanten Anordnung von Hydraulikleitung 15;115, Sperrventil 16; 116 und Volumenspeicher 17; 117 gilt die folgende Beschreibung ebenfalls entsprechend mit der Maßgabe, dass mindest jeweils eine der redundanten Baugruppen entsprechend funktioniert.

Befindet sich die Maschine, welche die hydraulisch beaufschlagbare Bremse aufweist, in Bremsstellung, steht zum Beispiel die Hubspindel 8 in zurückgezogener Position. Die Sicherheitsbremse befindet sich in Bremsstellung.

Das Sperrventil 16, welches zum Beispiel SPS-gesteuert betätigt wird, steht unter Spannung.

Es befindet sich folglich in Sperrposition.

Durch Betätigung des elektromotorischen Drehantriebs 5 wird die Bremse der Maschine nun beliebig gelüftet, während das Sperrventil weiterhin unter Strom bleibt.

Da die Hubspindel 8 über das selbsthemmende Getriebe mit dem elektromotorischen Drehantrieb 5 verbunden ist, bedarf es für den elektromotorischen Drehantrieb keiner Stromversorgung, dass heißt der Haltestrom ist Null.

Sollte allerdings eine Sicherheitsabschaltung erforderlich sein, öffnet das Sperrventil 16 zwangsläufig, da der Dichtkörper von seinem Sitz hebt.

Dies wird durch die Funktion der Vorlastfeder, die im Sperrventil 16 integriert ist, unterstützt.

Damit wird allerdings unabhängig von der Stellung der Hubspindel 8 der Hydraulikaktuator 4 der Bremse in den Volumenspeicher 17 entleert.

In Folge der Vorspannung durch den Volumenspeicher 17 kann die Hubspindel 8 in ihre Ausgangsposition zurück gefahren werden, ohne dass die Bremsfunktion beeinträchtigt wird.

Sollte die Maschine wieder mit Strom versorgt werden, bleibt das Sperrventil 16 zum Beispiel über die SPS gesteuert weiterhin in Offenstellung, so dass über die Vorspannung im Volumenspeicher 17 die Hydraulikflüssigkeit in das System zurückgelangen kann.

Dies geht einher mit einer Zurückverlagerung der Hubspindel 8 in die Ausgangsstellung, so dass mit Erreichen der Ausgangsstellung das Sperrventil 16 wieder in Schließstellung verlagert werden kann, sobald es wieder an Spannung liegt.

Damit ist die Maschine wieder betriebsbereit und kann die folgenden Arbeitszyklen ausführen.

Sollte die erfindungsgemäße Baugruppe für eine Aktivbremse gemäß Fig.3 verwendet werden, gelten die obigen Ausführungen sinngemäß mit der Maßgabe, dass die Parkbremsfunktion auch durch die Vorspannung im Volumenspeicher 17 erreicht wird, unabhängig von der Stellung der Hubspindel 8.

Zu diesem Zweck ist es erforderlich, dass Sperrventil 16 stromlos zu schalten, so dass die Vorspannung im Volumenspeicher 17 auf die Hydraulikflüssigkeit wirken kann, welche den Hydraulikaktuator 4 der Bremse 3 entsprechend beaufschlagt.

### Bezugszeichenliste:

- 1: Baugruppe
- 2: Hydraulikanschluss
- 3: Bremse
- 4: Hydraulikaktuator
- 5: Elektromotorischer Drehantrieb
- 6: Abtriebsseite
- 7: Getriebe
- 8: Hubspindel
- 9: Drehrichtungen von 5
- 10: Längsbewegung von 8
- 11: Kolben
- 12: Zylinder
- 13: Ausgangsseite
- 14: Hydraulikleitung
- 15: Weitere Hydraulikleitung
- 16: Sperrventil
- 17: Volumenspeicher
- 18: Speicherfeder
- 19: Membranspeicher
- 20: Spindelmutter
- 21: Hohlwelle
- 22: Tauchkolben
- 23: Ringspalt
- 24: Drehmomentstütze
- 25: Membran
- 115: redundante Hydraulikleitung'
- 116: redundantes Sperrventil
- 117: redundanter Volumenspeicher

## Patentansprüche

1. Elektrisch ansteuerbare Baugruppe (1) mit einem Hydraulikanschluss (2), ausgelegt für die Betätigung des Hydraulikaktuators (4) einer hydraulisch beaufschlagbaren Bremse (3);
die Baugruppe (1) verfügt über einen elektromotorischen Drehantrieb (5), der auf seiner Abtriebsseite (6) über ein Getriebe (7) mit einer in Längsrichtung hin- und herverlagerbaren Hubspindel (8) gekoppelt ist;
die Hubspindel (8) ist ihrerseits mit dem beweglichen Teil einer hydraulischen Einheit mit Kolben (11) und Zylinder (12) zu dessen Hin- und Herverlagerung verbunden; die Einheit aus Kolben (11) und Zylinder (12) trägt auf ihrer Ausgangsseite (13) den Hydraulikanschluss (2) und ist über eine Hydraulikleitung (14) an den Hydraulikaktuator (4) anschließbar, **dadurch gekennzeichnet, dass** an die Hydraulikleitung (14) zum Hydraulikaktuator (4) eine weitere Hydraulikleitung (15) angeschlossen ist, die über ein elektrisch schließendes Sperrventil (16) mit einem Volumenspeicher (17) kommuniziert wobei der Volumenspeicher (17) vorgespannt ist.

2. Elektrisch ansteuerbare Baugruppe (1) mit einem Hydraulikanschluss (2) nach Anspruch 2, **dadurch gekennzeichnet, dass** an die Hydraulikleitung (14) noch eine Hydraulikleitung als redundante Hydraulikleitung (115) angeschlossen ist, die über ein weiteres elektrisch schließbares redundantes Sperrventil (116) mit einem weiteren redundanten Volumenspeicher (117) kommuniziert.

3. Elektrisch ansteuerbare Baugruppe (1) mit einem Hydraulikanschluss (2) nach Anspruch 1 oder 2 **dadurch gekennzeichnet, dass** der volumenspeicher (17;117) durch eine Speicherfeder (18) vorgespannt ist.

4. Elektrisch ansteuerbare Baugruppe (1) mit einem Hydraulikanschluss (2) nach Anspruch 1 oder 2, **dadurch gekennzeichnet, dass** der Volumenspeicher (17;117) als pneumatisch vorgespannter Membranspeicher (19) ausgeführt ist.

5. Elektrisch ansteuerbare Baugruppe (1) mit einem Hydraulikanschluss (2) nach einem der Ansprüche 1 bis 4, **dadurch gekennzeichnet, dass** das Sperrventil (16) als Sitzventil ausgeführt ist.

6. Elektrisch ansteuerbare Baugruppe (1) mit einem Hydraulikanschluss (2) nach einem der Ansprüche 1 bis 5, **dadurch gekennzeichnet, dass** das Sperrventil (16) in Öffnungsrichtung federbeaufschlagt ist.

7. Elektrisch ansteuerbare Baugruppe (1) mit einem Hydraulikanschluss (2) nach einem der Ansprüche 1 bis 6, **dadurch gekennzeichnet, dass** die Bremse (3) als federbelastete Sicherheitsbremse ausgeführt ist, die hydraulisch gelüftet wird und bei Stromausfall federbelastet in Bremsstellung geht.

8. Elektrisch ansteuerbare Baugruppe (1) mit einem Hydraulikanschluss (2) nach einem der Ansprüche 1 bis 6, **dadurch gekennzeichnet, dass** die Bremse (3) als aktive Bremse ausgeführt ist, die über ihren Hydraulikaktuator (4) in Bremsstellung geht.

9. Elektrisch ansteuerbare Baugruppe (1) mit einem draulikanschluss (2) nach einem der Ansprüche 1 bis 9, **dadurch gekennzeichnet, dass** der elektromotorische Drehantrieb über ein selbsthemmendes Getriebe mit der Hubspindel (8) verbunden ist.

10. Elektrisch ansteuerbare Baugruppe (1) mit einem Hydraulikanschluss (2) nach Anspruch 9, **dadurch gekennzeichnet, dass** die Verbindung zwischen Drehantrieb und Hubspindel über eine Spindelmutter (20) erfolgt.

11. Elektrisch ansteuerbare Baugruppe (1) mit einem Hydraulikanschluss (2) nach Anspruch 10, **dadurch gekennzeichnet, dass** der elektromotorische Drehantrieb (5) ein Hohlwellenmotor ist, dessen Hohlwelle (21) die Spindelmutter (20) ist.

12. Elektrisch ansteuerbare Baugruppe (1) mit einem Hydraulikanschluss (2) nach einem der Ansprüche 1 bis 11, **dadurch gekennzeichnet, dass** die Einheit aus Kolben (11) und Zylinder (12) einen Tauchkolben (22) aufweist, der unter Freilassung eines Ringspaltes (23) in seinem Zylinder (12) hin- und herverlagerbar ist.

13. Elektrisch ansteuerbare Baugruppe (1) mit einem Hydraulikanschluss (2) nach einem der Ansprüche 1 bis 12, **dadurch gekennzeichnet, dass** die Hubspindel (8) über eine Drehmomentstütze (24) am Gehäuse abgestützt ist.

14. Elektrisch ansteuerbare Baugruppe (1) mit einem Hydraulikanschluss (2) nach einem der Ansprüche 1 bis 13, **dadurch gekennzeichnet, dass** die Baugruppe (1) eine vollständige Baueinheit mit elektrischen Anschlussvorrichtungen und einem Hydraulikanschluss (2) ist, und dass die weitere Hydraulikleitung(en) (15;115) im Gehäuse der Baugruppe (1) integriert ist/sind.

## Claims

1. Electrically controllable assembly (1) having a hydraulic connection (2), designed for actuating the hydraulic actuator (4) of a brake (3) which can be influenced hydraulically;
the assembly (1) has an electromotive rotary drive (5) which on its driven side (6) is coupled via a transmission (7) to a lifting spindle (8) which can be displaced in a reciprocating manner in the longitudinal direction;
the lifting spindle (8) is connected for its part to the movable part of a hydraulic unit having a piston (11) and cylinder (12) for reciprocating displacement thereof; the unit consisting of the piston (11) and cylinder (12) supports on its output side (13) the hydraulic connection (2) and can be connected via a hydraulic line (14) to the hydraulic actuator (4), **characterised in that** a further hydraulic line (15) is connected to the hydraulic line (14) for the hydraulic actuator (4) and communicates via an electrically closing blocking valve (16) with a volume accumulator (17), wherein the volume accumulator (17) is pretensioned.

2. Electrically controllable assembly (1) having a hydraulic connection (2) as claimed in claim 2 [*sic*], **characterised in that** yet another hydraulic line is connected as a redundant hydraulic line (115) to the hydraulic line (14) and communicates via a further electrically closable redundant blocking valve (116) with a further redundant volume accumulator (117).

3. Electrically controllable assembly (1) having a hydraulic connection (2) as claimed in claim 1 or 2, **characterised in that** the volume accumulator (17; 117) is pretensioned by means of an accumulator spring (18).

4. Electrically controllable assembly (1) having a hydraulic connection (2) as claimed in claim 1 or 2, **characterised in that** the volume accumulator (17; 117) is designed as a pneumatically pretensioned diaphragm accumulator (19).

5. Electrically controllable assembly (1) having a hydraulic connection (2) as claimed in any one of claims 1 to 4, **characterised in that** the blocking valve (16) is designed as a seat valve.

6. Electrically controllable assembly (1) having a hydraulic connection (2) as claimed in any one of claims 1 to 5, **characterised in that** the blocking valve (16) is spring-influenced in the opening direction.

7. Electrically controllable assembly (1) having a hydraulic connection (2) as claimed in any one of claims 1 to 6, **characterised in that** the brake (3) is designed as a springloaded safety brake which is hydraulically vented and moves under spring-loading to the braking position in the event of a power failure.

8. Electrically controllable assembly (1) having a hydraulic connection (2) as claimed in any one of claims 1 to 6, **characterised in that** the brake (3) is designed as an active brake which moves to the braking position by means of its hydraulic actuator (4).

9. Electrically controllable assembly (1) having a hydraulic connection (2) as claimed in any one of claims 1 to 8, **characterised in that** the electromotive rotary drive is connected via a self-locking transmission to the lifting spindle (8).

10. Electrically controllable assembly (1) having a hydraulic connection (2) as claimed in claim 9, **characterised in that** the connection between the rotary drive and the lifting spindle is established by a spindle nut (20).

11. Electrically controllable assembly (1) having a hydraulic connection (2) as claimed in claim 10, **characterised in that** the electromotive rotary drive (5) is a hollow shaft motor, whose hollow shaft (21) is the spindle nut (20).

12. Electrically controllable assembly (1) having a hydraulic connection (2) as claimed in any one of claims 1 to 11, **characterised in that** the unit consisting of the piston (11) and cylinder (12) comprises a plunger piston (22) which can be displaced in a reciprocating manner in its cylinder (12) whilst leaving an annular gap (23) free.

13. Electrically controllable assembly (1) having a hydraulic connection (2) as claimed in any one of claims 1 to 12, **characterised in that** the lifting spindle (8) is supported on the housing via a torque support (24).

14. Electrically controllable assembly (1) having a hydraulic connection (2) as claimed in any one of claims 1 to 13, **characterised in that** the assembly (1) is a complete structural unit having electric connection devices and a hydraulic connection (2), and **in that** the further hydraulic line(s) (15; 115) is/are integrated in the housing of the assembly (1).

## Revendications

1. Composant (1) à commande électrique avec un raccordement hydraulique (2), conçu pour l'actionnement de l'actionneur hydraulique (4) d'un frein (3) apte à être sollicité par voie hydraulique ;
le composant (1) dispose d'un entraînement rotatif par moteur électrique (5) qui est accouplé sur son côté sortie (6), par l'intermédiaire d'une transmission (7), à un axe à mouvement alternatif (8) mobile suivant un mouvement de va-et-vient dans le sens longitudinal ;
l'axe à mouvement alternatif (8) est lui-même relié à la partie mobile d'une unité hydraulique comportant un piston (11) et un cylindre (12), pour déplacer celui-ci suivant un mouvement de va-et-vient ; l'unité composée d'un piston (11) et d'un cylindre (12) porte sur son côté sortie (13) le raccordement hydraulique (2) et est apte à être raccordée par l'intermédiaire d'une conduite hydraulique (14) à l'actionneur hydraulique (4), **caractérisé en ce qu'**il est prévu, raccordée à la conduite hydraulique (14) menant à l'actionneur hydraulique (4), une autre conduite hydraulique (15) qui communique avec un accumulateur de volume (17) par l'intermédiaire d'une soupape d'arrêt (16) à fermeture électrique, ledit accumulateur de volume (17) étant soumis à une contrainte initiale.

2. Composant (1) à commande électrique avec un raccordement hydraulique (2) selon la revendication 1, **caractérisé en ce qu'**il est également prévu, raccordée à la conduite hydraulique (14), une conduite hydraulique comme conduite hydraulique redondante (115) qui communique par l'intermédiaire d'une autre soupape d'arrêt redondante (116) à fermeture électrique avec un autre accumulateur de volume redondant (117).

3. Composant (1) à commande électrique avec un raccordement hydraulique (2) selon la revendication 1 ou 2, **caractérisé en ce que** l'accumulateur de volume (17 ; 117) est soumis à une contrainte initiale par un ressort d'accumulateur (18).

4. Composant (1) à commande électrique avec un raccordement hydraulique (2) selon la revendication 1 ou 2, **caractérisé en ce que** l'accumulateur de volume (17 ; 117) est réalisé sous la forme d'un accumulateur à membrane (19) à contrainte initiale pneumatique.

5. Composant (1) à commande électrique avec un raccordement hydraulique (2) selon l'une des revendications 1 à 4, **caractérisé en ce que** la soupape d'arrêt (16) est réalisée sous la forme d'une soupape à siège.

6. Composant (1) à commande électrique avec un raccordement hydraulique (2) selon l'une des revendications 1 à 5, **caractérisé en ce que** la soupape d'arrêt (16) est soumise à une contrainte élastique dans le sens d'ouverture.

7. Composant (1) à commande électrique avec un raccordement hydraulique (2) selon l'une des revendications 1 à 6, **caractérisé en ce que** le frein (3) est réalisé sous la forme d'un frein de sécurité à contrainte élastique qui est desserré par voie hydraulique et qui, en cas de panne de courant, passe en position de freinage sous la contrainte élastique.

8. Composant (1) à commande électrique avec un raccordement hydraulique (2) selon l'une des revendications 1 à 6, **caractérisé en ce que** le frein (3) est réalisé sous la forme d'un frein actif qui passe en position de freinage par l'intermédiaire de son actionneur hydraulique (4).

9. Composant (1) à commande électrique avec un raccordement hydraulique (2) selon l'une des revendications 1 à 8, **caractérisé en ce que** l'entraînement rotatif par moteur électrique est relié par l'intermédiaire d'une transmission à blocage automatique à l'axe à mouvement alternatif (8).

10. Composant (1) à commande électrique avec un raccordement hydraulique (2) selon la revendication 9, **caractérisé en ce que** la liaison entre l'entraînement rotatif et l'axe à mouvement alternatif se fait par l'intermédiaire d'un écrou d'axe (20).

11. Composant (1) à commande électrique avec un raccordement hydraulique (2) selon la revendication 10, **caractérisé en ce que** l'entraînement rotatif par moteur électrique (5) est un moteur à arbre creux dont l'arbre creux (21) constitue l'écrou d'axe (20).

12. Composant (1) à commande électrique avec un raccordement hydraulique (2) selon l'une des revendications 1 à 11, **caractérisé en ce que** l'unité composée d'un piston (11) et d'un cylindre (12) comporte un piston plongeur (22) qui est apte à être déplacé suivant un mouvement de va-et-vient en laissant un interstice annulaire (23) dans son cylindre (12).

13. Composant (1) à commande électrique avec un raccordement hydraulique (2) selon l'une des revendications 1 à 12, **caractérisé en ce que** l'axe à mouvement alternatif (8) est en appui contre le carter par l'intermédiaire d'un support de couple (24).

14. Composant (1) à commande électrique avec un raccordement hydraulique (2) selon l'une des revendications 1 à 13, **caractérisé en ce que** le composant (1) est une unité de construction complète avec des dispositifs de raccordement électriques et un raccordement hydraulique (2), et **en ce que** la ou les autres conduites hydrauliques (15 ; 115) sont intégrées dans le carter du composant (1).
